# EUROPÄISCHE PATENTSCHRIFT

(11) **EP 1 016 877 B1**
(45) Veröffentlichungstag und Bekanntmachung des Hinweises auf die Patenterteilung: **18.04.2007**
(21) Anmeldenummer: 99123553.2
(22) Anmeldetag: 26.11.1999
(51) Int. Cl.: G01S 13/87

(54) **System zur räumlichen Zuordnung wenigstens eines Transponders zu Zellen eines Detektionsgebietes, Basisstation sowie Transponder**
System for the spatial allocation of at least one transponder to cells of a detection area, base station and transponder
Système pour l'affectation spatiale d'au moins un transpondeur à des cellules d'une zone de détection, station de base et transpondeur

(30) Priorität: 28.12.1998 DE 19859947
(43) Veröffentlichungstag der Anmeldung: 05.07.2000
(73) Patentinhaber: Stobbe, Anatoli, 30890 Barsinghausen (DE)
(72) Erfinder: Stobbe, Anatoli, 30890 Barsinghausen (DE); Merk, Holger, 30890 Barsinghausen (DE)
(74) Vertreter: Körner, Peter

(56) Entgegenhaltungen:
- EP-A- 0 667 537
- WO-A-95/28691
- DE-C- 19 824 528
- US-A- 3 852 750

## Beschreibung

Die Erfindung betrifft ein Verfahren zur räumlichen Zuordnung wenigstens eines Transponders zu Zellen eines Detektionsgebietes nach dem Oberbegriff des Anspruchs 1.

Transponder sind mobile elektronische Schaltkreise, die vornehmlich zur Identifizierung von Personen, Tieren oder Gegenständen dienen und einen berührungslosen Datenaustausch mit einer Basisstation ermöglichen.

Ein weiteres Anwendungsgebiet besteht in der Verfolgung mobiler Gegenstände für logistische Zwecke oder zur Wertsicherung.

Bei den bisher bekannten Anwendungsfällen erfolgte die räumliche Zuordnung des Transponders durch Identifizierung mittels einer Basisstation, in deren Feld er verbracht wurde.

Dieser Fall beschränkt sich auf die nähere Umgebung eines von einer Antenne der Basisstation erzeugten Feldes. Es besteht Bedarf, eine räumliche Identifizierung auch in einem größeren Bereich als dem Bereich einer Antenne der Basisstation zu ermöglichen.

Grundsätzlich ist die Positionsbestimmung von mobilen Empfangsgeräten bekannt. So ist beispielsweise das GSM-Mobilfunknetz in Funkzellen unterteilt, denen feste Funkstationen zugeordnet sind. Das Mobiltelefon empfängt in Zeitschlitzen und auf verschiedenen Empfangsfrequenzen mehrere Sendestationen gleichzeitig und stellt eine Verbindung mit derjenigen Funkstation her oder wechselt zu derjenigen Funkstation, bei der eine bestmögliche Funkübertragung gewährleistet ist.

Zum Zwecke einer Signalisierung eines Mobiltelefons durch ankommende Anrufe überwacht das Mobiltelefon außerdem feste Signalisierungszonen und übermittelt dem Netz eine Information, sobald zu einer benachbarten Signalisierungszone gewechselt wird. Hierbei ist allerdings die räumliche Positionsbestimmung von untergeordneter Bedeutung. Vielmehr kommt es auf eine möglichst gute Qualität der Funkübertragung an. Dies bedeutet, daß durch Abschattungen oder Reflexionen eine andere Zuordnung erfolgen kann, als sie der geographischen Position zu den Standorten der ortsfesten Funkstationen entsprechen würde.

Eine andere Art der Positionsbestimmung erfolgt bei GPS-System. Hier wird mittels eines GPS-Empfängers das Signal von mehreren im Orbit befindlichen ortsfesten Satelliten empfangen und aus der Differenz der Laufzeiten der empfangenen Signale die eigene Position berechnet.

Aus der WO 95/28691 A1 ist ein Tier-Überwachungssystem bekannt. Dieses System umfaßt einen Sender, der ein elektromagnetisches Feld in einem Bereich erzeugt, von dem sich das Tier fernhalten soll. Das Tier, der Zeichnung nach ein Dackel, trägt ein Halsband mit einem Transponder sowie einen vom Transponder aktivierbaren akustischen Alarmgeber und ein Elektroschock-Gerät. Der Transponder wertet bei Eintritt in das elektromagnetische Feld dieses aus und vergleicht es mit zwei Schwellwerten. Bei Überschreiten eines ersten Schwellwertes wird zunächst der akustische Alarmgeber aktiviert, um das Tier zu warnen. Kümmert sich das Tier nicht um den akustischen Alarm und läuft weiter, was bei Dackeln zunächst typisch ist, wird bei Überschreiten des zweiten Schwellwertes auch das Elektroschock-Gerät aktiviert. Dies soll das Tier dann energisch zur Umkehr veranlassen. Eine Standortbestimmung ist mit dieser Veröffentlichung nicht beabsichtigt

Aus der US 3 852 750 A ist ein Satelliten-Navigations-System bekannt, das auf dem ursprünglich für terrestrische Sender eingeführten Omega-Navigationssystem aufbaut. Über identische Satelliten wird wechselweise ein Trägerfrequenz-moduliertes Omega-Signal ausgestrahlt, das bei Auswertung der Aussendungen von drei stationären Sendern über Phasenverschiebungen der Signale eine relative Standortbestimmung ermöglicht. Die Satelliten strahlen zeitversetzt jeweils die gleiche Omega-Signalfolge aus. Ein Omega-Empfänger kann dann ausgehend von einem bekannten Standort unter Auswertung der Omega-Signale von drei Satelliten seinen aktuellen Standort bestimmen. Voraussetzung dazu ist, dass der Omega-Empfänger ständig eingeschaltet und mit den Omega-Signalen synchronisiert ist. Eine absolute Standortbestimmung allein aufgrund der Omega-Signale ist nicht möglich.

Der Erfindung liegt die Aufgabe zugrunde, ausgehend von der Datenübertragung zwischen einer Basisstation und wenigstens einem Transponder eine eindeutige Zuordnung jedes Transponders zu Zellen des Detektionsgebietes zu ermöglichen und zu melden.

Diese Aufgabe wird bei einem Verfahren zur räumlichen Zuordnung wenigstens eines Transponders zu Zellen eines Detektionsgebietes nach dem Oberbegriff des Anspruchs 1 durch die Merkmale des Anspruchs 1 gelöst.

Weiterbildungen und vorteilhafte Ausgestaltungen der Erfindung ergeben sich aus den Unteransprüchen.

Für die räumliche Zuordnung ist es ausreichend, wenn wenigstens zwei Zellen vorhanden sind, deren Eigenschaften ihrer elektromagnetischen Felder veränderbar oder permanent unterschiedlich sind. Veränderbar kann in diesem Falle bedeuten, daß sich die Eigenschaften ständig ändern oder auch, daß die Eigenschaften nur während eines begrenzten Zeitraumes, der z.B. zur Detektion dient, unterschiedlich sind. Der Transponder wertet die Eigenschaften der empfangbaren Felder aus. Bei nicht-überlappenden Feldern werden diese nacheinander empfangen und ausgewertet. Solange sich der Transponder in einem der Felder befindet, ist aufgrund der unterschiedlichen Eigenschaften der Felder zumindest eine grobe Positionsangabe dahingehend möglich, daß sich der Transponder in der zu diesem Feld zugehörenden Zelle aufhält. Auch kann aus der Reihenfolge der Felder, in die der Transponder eingetreten ist, eine Bewegungsrichtung hergeleitet werden. Aufgrund der ständigen oder zeitweisen Unterschiedlichkeit der Felder kann der Transponder auch bei einem Eintritt in ein Feld von außen eine eindeutige Zuordnung treffen, in welches Feld er gelangt ist.

Bei überlappenden Feldern sind mehrere Fallunterscheidungen zu treffen. Besitzen die Felder unterschiedliche Frequenzen und ist der Transponder mit mehreren Empfängern ausgestattet, so können gleichzeitig mehrere Felder ausgewertet werden. Ist der Transponder mit einem Empfänger ausgestattet, so können ebenfalls mehrere Felder überwacht werden, wenn im Zeitmultiplex die Felder ein- bzw. ausgeschaltet werden oder die Frequenz des Empfängers umgeschaltet wird.

Schließlich ist es auch möglich, daß die Felder sich bei gleicher oder nahezu gleicher Frequenz überlagern und somit vom Empfänger die Resultierende der sich überlagernden Felder ausgewertet wird. Die Zuordnung des Transponders zu den einzelnen Zellen erfolgt dann dadurch, daß entweder bei mehreren selektiv empfangenen Feldern die Eigenschaften verglichen werden und die Zuordnung nach dem in der Feldstärke dominierenden Anteil oder dem Verhältnis der Anteile ermittelt wird oder daß bei einem resultierenden Feld die Zuordnung danach getroffen wird, welche Anteile der Resultierenden dominieren und damit sicher auswertbar sind.

Besonders einfach und eindeutig ist eine Auswertung dann, wenn mit Feldern gleicher Frequenz gearbeitet wird und sich die Phase der Felder benachbarter Zellen um 180 Grad unterscheidet. Die Eigenschaften der Felder können dann noch so variiert werden, daß zum Zwecke einer Positionsbestimmung für die Dauer einer Meßzeit die Phasenlage der Felder einiger Zellen zyklisch zwischen 0 Grad und 180 Grad umgeschaltet wird, während die Phasenlage der Felder der anderen angrenzenden Zellen beibehalten wird. Der Transponder kann dann einfach durch Auswertung der Phasen innerhalb der Meßzeit ermitteln, in welcher der Zellen er sich befindet.

Unterscheiden sich die Eigenschaften der Felder der Zellen eindeutig, so ist zumindest eine grobe eindeutige Zuordnung möglich, in welcher Zelle sich der Transponder befindet. Eine genaue Position würde hingegen zusätzlich die Auswertung der Verhältnisse der Feldstärken der einzelnen Felder erforderlich machen.

Dadurch, daß die Transponder selbständig die Zuordnung treffen, ist im einfachsten Fall kein Dialog zwischen dem Transponder und der Basisstation erforderlich. Vielmehr reicht das Vorhandensein der elektromagnetischen Felder aus. Dadurch können auch mehrere Transponder, die sich im Detektionsgebiet gleichzeitig befinden, auch gleichzeitig und unabhängig voneinander ihre Zuordnung zu den einzelnen Zellen bestimmen.

Sofern mehrere Antwortkanäle zur Basisstation bestehen, können die ermittelten Positionen gleichzeitig im Frequenzmultiplex oder nahezu gleichzeitig im Zeitmultiplex zur Basisstation gemeldet werden.

Im Gegensatz zu Vorschlägen, bei denen die Auswertung nicht direkt im Transponder, sondern durch die Basisstation alleine bzw. im Dialog Transponder - Basisstation erfolgt, ist bei der erfindungsgemäßen Lösung die Schnelligkeit der Positionsbestimmung unabhängig von der Anzahl der im Detektionsgebiet befindlichen Transponder und ebenfalls unabhängig von der Datenrate des Dialogs zwischen den Transpondern und der Basisstation.

Die Frequenz der zur räumlichen Zuordnung der Transponder dienenden elektromagnetischen Felder liegt im NF-Bereich bis 150 kHz, vorzugsweise zwischen 8 kHz und 125 kHz.

Diese niedrige Betriebsfrequenz zeichnet das System dahingehend aus, dass eine große Eindringtiefe in Materialien vorhanden ist, und dass die Homogenität der elektromagnetischen Felder durch Gegenstände in der Nähe der Sendeantennen nur geringfügig beeinträchtigt wird. Daher ist eine Montage auch in unmittelbarer Nähe von Metallbauteilen möglich: Im Gegensatz zu hochfrequenten Feldern treten keine Reflektionen auf, die zu unerwünschten und veränderlichen Nullstellen oder Anhebungen der Feldstärke führen könnten. Ferner werden die Felder auch durch dynamisch in das Detektionsgebiet eingeführte oder dort verlagerte Gegenstände kaum beeinträchtigt. Darüber hinaus ist auch eine Abschirmung zu Manipulationszwecken nicht oder nur begrenzt wirksam.

Erfindungsgemäß wird bei Zuordnung zu ausgewählten Zellen und/oder zwischen aneinander grenzenden Zellen unmittelbar, verzögert oder nach statistischer Auswertung der Häufigkeit ein Schaltvorgang durch den Transponder ausgelöst, durch den eine ferngesteuerte Aktion durch Aussenden eines Funksignals an wenigstens einen Funkempfänger vorgenommen wird.

Es ist daher möglich, sowohl jede Positionsbestimmung als auch eine Zustandmeldung sofort oder verzögert zur Basisstation zu melden oder aber auch eine in ihrer Filtertiefe einstellbare Filterung einzustellen.

Durch die ferngesteuerte Aktion wird eine Position oder eine Zustandsmeldung von einem Transponder zu einer Basisstation über eine Rückmeldefrequenz, oder eine zusätzliche Rückmeldefrequenz im NF-Bereich bis 150 kHz, vorzugsweise zwischen 14 kHz und 125 kHz, zurückgemeldet.

Im Gegensatz zu einer Frequenz oberhalb 10 MHz, bei der elektromagnetische Felder sehr leicht abgeschattet oder abgeschirmt werden können, oder bei einer gestörten Übertragungsstrecke im hohen Frequenzbereich, ist im NF-Bereich bis 150 kHz trotzdem eine Signalisierung vom Transponder zur Basisstation möglich.

Gemäß einer Weiterbildung kann bei gleichen Anteilen der Feldstärke der selektiv oder resultierend empfangenen elektromagnetischen Felder dieses Ergebnis als Grenze zwischen zwei benachbarten Zellen gewertet werden.

Diese Weiterbildung ermöglicht hier als Sonderfall die Positionsbestimmung in einem Übergangsbereich der Felder zweier benachbarter Zellen. Da die Feldstärke mit zunehmender Entfernung von einer Sendeantenne exponentiell abfällt, gibt es einen relativ schmalen scharf abgegrenzten Bereich zwischen benachbarten Zellen (Demarkationslinie), in dem die Feldstärke der den einzelnen Zellen zugeordneten Antennen gleich ist. Wenn die Eigenschaften der Felder unabhängig voneinander ausgewertet werden können, kann dieser Fall durch Vergleich der Anteile ermittelt werden.

Bei einem resultierenden Feld hingegen, z.B. einer Auslöschung, führt dies zu einer indifferenten und damit nicht mehr eindeutig möglichen Auswertung, da der Transponder sich auch außerhalb des Erfassungsbereiches der Basisstation befinden kann. Wenn der Transponder zuvor eine gültige Standortinformation erfaßt hat und danach wieder eine andere gültige Standortinformation vom Transponder erfaßt wird, ist dies jedoch ein Kriterium für den Aufenthalt im Grenzbereich (Demarkationslinie) zwischen den Zellen.

Weiterhin ist vorgesehen, daß die Ergebnisse der Zuordnung zur Grenze zwischen zwei benachbarten Zellen intern gespeichert werden.

Dies ermöglicht es, die protokollierten Daten später zur Basisstation oder einer Abfragestation zu übertragen und dort auszuwerten, oder im Transponder eine Auswertung einer größeren Datenmenge vorzunehmen.

So kann gemäß einer Weiterbildung eine statistische Auswertung der Häufigkeit der Zuordnung zur Grenze zwischen zwei benachbarten Zellen direkt im Transponder vorgenommen werden, bevor die gemessene Position der Basisstation gemeldet wird.

Auf diese Weise ist eine Art Filterung möglich, mit der es gelingt, fehlerhafte Positionsbestimmungen im Transponder zu eliminieren. Dies ist sinnvoll, wenn mit der Positionsbestimmung auch eine Alarm-Signalisierung verknüpft ist und die Auslösung von Fehlalarmen vermieden werden soll.

Es besteht auch die Möglichkeit, eine Auswertung der Reihenfolge der Zuordnung zu einer der Zellen und/oder zur Grenze zwischen zwei benachbarten Zellen im Transponder vorzunehmen.

Hierdurch läßt sich ähnlich einem Fahrtenschreiber ein Bewegungsprofil und auch eine Bewegungsrichtung ermitteln.

Es kann dann bei Wechsel der Zuordnung zu ausgewählten Zellen und/oder zwischen aneinander grenzenden Zellen in einer vorgegebenen Reihenfolge unmittelbar, verzögert oder nach statistischer Auswertung der Häufigkeit ein Schaltvorgang durch den Transponder ausgelöst werden.

Bei dem Schaltvorgang kann es sich um eine lokale Aktion, wie einen optischen oder akustischen Alarm, eine Deaktivierung einer elektronischen Schaltung oder eine Entwertung oder Markierung von Wertgegenständen handeln.

Diese Maßnahmen sind besonders für den Anwendungsfall als Diebstahlssicherung von wertvollen Gütern geeignet. So kann beispielsweise in einem Geld- oder Wertpapierbehälter, der mit einem Transponder ausgestattet ist, ein Markierungs- oder Farbstoff freigesetzt werden, der das Geld oder die Wertpapiere markiert oder unbrauchbar macht, sobald diese unbefugt aus einem Sicherheitsbereich entfernt werden. Bei mit elektronischen Schaltungen versehenen Geräten kann die elektronische Schaltung deaktiviert werden, so daß sie ohne Reaktivierung mittels eines Aktivierungscodes unbrauchbar wäre.

Zusätzlich oder alternativ kann auch durch den Schaltvorgang eine ferngesteuerte Aktion über eine Signalleitung vorgenommen werden. Entsprechende Aktionen, z.B. eine Alarmgabe kann dann durch die Basisstation erfolgen.

Es ist auch möglich, daß eine Aktivierung für Schaltvorgänge im Transponder und/oder die Art der ausgelösten Aktionen und/oder das Schreiben oder Ändern von Daten im Speicher des Transponders durch die Basisstation oder durch eine Schreib- und/oder Lesevorrichtung durchgeführt wird.

Bei einer Überwachungseinrichtung der Ein- und Ausgänge eines Gebäudes hätte die Basisstation die Aufgabe, an den zu schützenden Ausgängen mit Hilfe der elektromagnetischen Felder Bereiche oder eine Demarkationslinie zu schaffen, die beim unerlaubten Passieren eine der zuvor beschriebenen Funktionen auslöst.

Möchte der Besitzer z.B. eines Notebook-Computers unbehelligt den Bereich oder die Demarkationslinie passieren, muß er vor dem Verlassen seinen Computer mit integriertem Diebstahlschutztransponder z.B. für eine Passage entsprechend codieren (d.h. freischalten) lassen. Dies kann ebenfalls durch Übertragung eines Kodes mittels der Basisstation oder durch eine Schreib- und/oder Lesevorrichtung erfolgen.

Ergänzend könnte der Transponder parallel zur zuvor beschriebenen Funktion seine Nummer senden, damit man die Chance hat, zu registrieren, ob der Transponder wirklich die Demarkationslinie passiert (check out). Die gleiche Funktion wird gebraucht, um bei dieser Betriebsart zu erkennen, daß ein Transponder wieder zurück ins Gebäude gekommen ist (check in).

Die veränderbar oder permanent unterschiedlichen Eigenschaften der elektromagnetischen Felder können durch einen der Parameter oder eine Kombination der Parameter Feldstärke, Phase zwischen den Feldern, Frequenz sowie Modulationsinhalt gebildet sein.

Grundsätzlich sind dabei alle Parameter geeignet, die eine Unterscheidung der Eigenschaften zulassen. In der Praxis wird zweckmäßig ein Parameter oder eine Kombination mehrerer Parameter ausgewählt, die eine möglichst eindeutige und gegen Störungen unempfindliche Unterscheidung ermöglichen. Darüber hinaus kann ein weiteres Kriterium für die Auswahl der Parameter auch darin liegen, außer einer Ja/Nein-Entscheidung noch analoge zusätzliche Kennwerte zu übermitteln, die es ermöglichen, nicht nur die Ränder der Felder sowie die Demarkationslinie zu erfassen, sondern auch eine relative Position im Feld selber zu erfassen.

Die veränderbar unterschiedlichen Eigenschaften der elektromagnetischen Felder können bedarfsweise so bemessen werden, daß eine feste oder eine verschiebbare Demarkationslinie zwischen unterschiedlichen Zellen erzeugt wird.

Durch die exponentiell mit zunehmendem Abstand vom Sender abnehmende Feldstärke ergibt sich ein sehr schmaler Übergangsbereich zwischen benachbarten Zellen, der als Demarkationslinie betrachtet werden kann. Durch gezieltes Ändern der Feldstärkeverhältnisse läßt sich diese Zone in gewissen Bereichen verschieben. Die Demarkationslinie kann so bei Beschränkungen der Montagemöglichkeiten der Antennen durch elektrischen Abgleich verändert und der gewünschten Position zugeordnet werden.

Rückmeldungen vom Transponder zu einer Basisstation liegt werden zweckmäßig im hohen Frequenzbereich, vorzugsweise oberhalb von 10 MHz vorgenommen.

Die Betriebsfrequenzen zum Senden und Empfangen sind dadurch soweit auseinander, daß ein Duplexbetrieb ohne störende Beeinflussung möglich ist. Die hohe Frequenz für den Rückkanal hat zudem den Vorteil, daß der Transponder nur eine sehr kleine Antenne und eine geringe Sendeleistung benötigt. Zudem sind in dem genannten Frequenzbereich keine Störungen durch Schaltvorgänge anderer elektrischer Geräte oder durch atmosphärische Störungen vorhanden, so daß eine sichere Datenübertragung in den meisten Fällen gewährleistet ist.

Gemäß einer Weiterbildung kann vorgesehen sein, daß jedem Transponder nach einem ersten oder erneuten Eintritt in eines der elektromagnetischen Felder des Detektionsgebietes durch einen im elektromagnetischen Feld der Basisstation enthaltenen Kode ein allgemeiner Antwortkanal in Form eines Zeitschlitzes und/oder einer Frequenz für eine erste oder erneute Identifikation zugewiesen wird.

Es können dann im Vorfeld gestörte oder belegte Kanäle des Systems ausgeschlossen werden und so eine schnelle und sichere Identifizierung der neu oder wieder ins Feld eintretenden Transponder gewährleistet werden. Der Kode kann auch mit der Ortskennung der Zellen bzw. anderen Daten von der Basisstation verknüpft werden.

Weiter ist es zweckmäßig, wenn jeder Transponder nach einem ersten oder erneuten Eintritt in eines der elektromagnetischen Felder des Detektionsgebietes eine individuelle Kennung zur Basisstation sendet und dem Transponder durch die Basisstation darauf ein eindeutiger Kanal für Rückmeldungen zugewiesen wird.

Dies hat den Vorteil, daß mehrere Transponder selektiv Rückmeldungen über ihre Position an die Basisstation senden können und bereits durch den Kanal eindeutig festgelegt wird, von welchem Transponder die Rückmeldungen stammen.

Der Kanal für Rückmeldungen kann durch ein Zeitfenster und/oder einen Frequenzkanal innerhalb des für Rückmeldungen reservierten Frequenzbereiches gebildet werden.

Wenn mehrere Frequenzkanäle zur Verfügung stehen, ist auch eine gleichzeitige Rückmeldung mehrerer Transponder möglich. Dies gestattet es, auch bei geringer individueller Datenrate den Gesamtdatendurchsatz zu erhöhen.

Es kann vorgesehen sein, daß von jedem Transponder nach Zuweisung seines Rückkanals regelmäßig oder auf Anforderung der Basisstation Daten über seine räumliche Zuordnung zu den Zellen des Detektionsgebietes zur Basisstation übermittelt werden.

Dadurch wird eine geordnete Datenübertragung möglich, die es gestattet, eine Vielzahl von Transpondern gleichzeitig im Detektionsgebiet zu verwalten. Es werden Kollisionen, also das gleichzeitige vergebliche Senden mehrerer Transponder, vermieden und damit die begrenzten Energiequellen der Transponder vor vorzeitiger Erschöpfung geschont.

Weiterhin ist es möglich, daß von jedem Transponder auf Anforderung der Basisstation oder einer Schreib- und/oder Lesevorrichtung zusätzlich Identifizierungsdaten und/oder Zustandsdaten und/oder Daten seines Speicherinhalts zur Basisstation oder Schreib- und/oder Lesevorrichtung übermittelt werden.

Auf die Weise können z.B. Berechtigungsdaten abgefragt und so auch Manipulationen versuchter Änderungen der Berechtigungsdaten aufgedeckt werden. Auch ist eine Prüfung der Batteriespannung möglich, um rechtzeitig auf einen Austausch hinweisen zu können.

Eine weitere Sicherungsmaßnahme kann darin bestehen, daß der Übertragungsweg im hochfrequenten Bereich zwischen dem Transponder und der Basisstation von wenigstens einem HF-Empfänger überwacht wird, und daß bei Unterbrechung des Übertragungsweges im hochfrequenten Bereich vom Transponder zur Basisstation eine Rückmeldung im NF-Bereich übermittelt wird.

Diese Maßnahme ermöglicht es, eine Störung des Übertragungweges im hochfrequenten Bereich frühzeitig, d. h., bereits kurz nach dem Eintritt eines Transponders in das Detektionsgebiet, zu erkennen und gegebenenfalls zu signalisieren.

Bei einem möglichen Anwendungsfall der Erfindung ist der Transponder im Gehäuse eines zu überwachenden elektronischen Gerätes eingebaut und mit der elektronischen Schaltung derart gekoppelt, daß Zustände und/oder in der elektronischen Schaltung gespeicherte Daten ausgelesen und mittels des Transponders zur Basisstation übertragen werden und/oder mittels der Basisstation über den Transponder Zustände der elektronischen Schaltung gesetzt werden und/oder Daten eingeschrieben und gespeichert werden.

Bei dieser sehr engen mechanischen und elektrischen Koppelung des Transponders an die elektronische Schaltung sind Manipulationsversuche sehr schwierig und ohne Fachkenntnisse nicht möglich. Darüberhinaus wird auch ein unmittelbarer Datenaustausch zwischen dem Transponder und der elektronischen Schaltung möglich und bedarfsweise können vorhandene Hardware- und Softwareresorcen gemeinsam genutzt werden.

Nachfolgend wird die Erfindung anhand der Zeichnung erläutert. In der Zeichnung zeigen:
- Fig. 1: zeigt eine schematische Anordnung eines Detektionsgebietes aus insgesamt vier Zellen, in dem sich Transponder befinden und
- Fig. 2: zeigt ein Blockschaltbild eines Transponders.

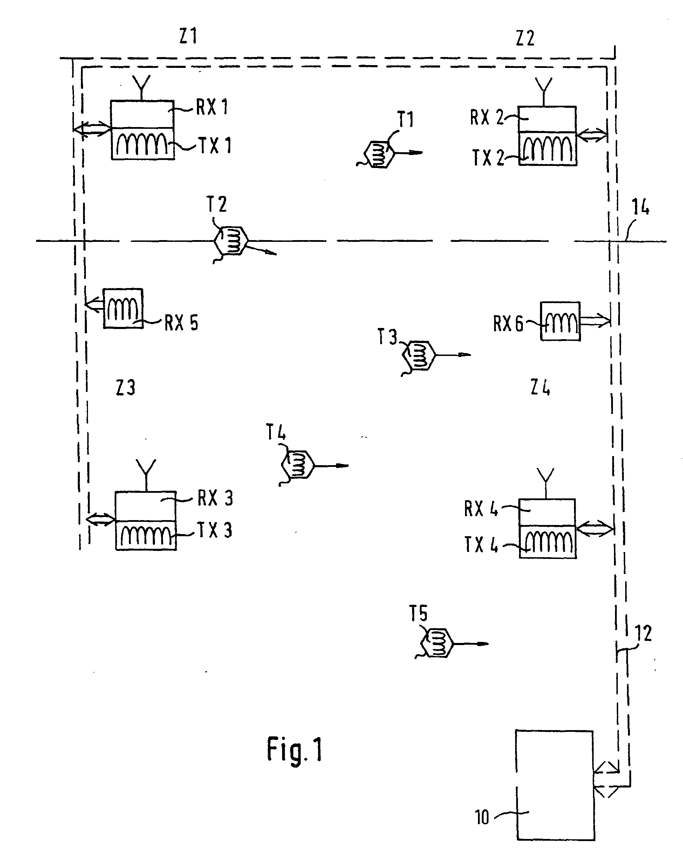

Fig. 1 zeigt eine schematische Anordnung eines Detektionsgebietes aus insgesamt vier Zellen Z1, Z2, Z3, Z4, in dem sich Transponder T1, T2, T3, T4, T5 befinden, wobei die vier Zellen Z1, Z2, Z3, Z4 von einer gemeinsamen Basisstation 10 gesteuert sind. Obgleich die Erfindung auch mit zwei Zellen realisiert werden kann, bieten vier Zellen eine bessere Flächendeckung des Detektionsgebietes bei geringerer Sendeleistung je Zelle.

Ein Anwendungsbeispiel könnte der Ein- und Ausgangsbereich eines Serviceunternehmens sein, der neben Innendienstmitarbeitern auch Außendienstmitarbeiter beschäftigt, die zur Erfüllung ihrer Aufgabe Notebook-Computer verwenden, die sie aus dem Gebäude mitnehmen können.

Zur Kontrolle der erlaubten und nicht erlaubten Mitnahme der Computer sind sämtliche Geräte mit Transpondern T ausgestattet, die einen im NF-Bereich bei 8 kHz arbeitenden Empfänger, eine Auswerte- und Steuerschaltung, einen im HF-Bereich bei 433 MHz arbeitenden Sender sowie einen weiteren im NF-Bereich bei 14 kHz arbeitenden Sender, Empfangs- und Sendeantennen und eine Batterie besitzen. Die Auswerte- und Steuerschaltung jedes Transponders T verfügt über Speicher, in dem eine individuelle Kennung gespeichert ist.

Im Ein- und Ausgangsbereich des Gebäudes befindet sich ein Detektionsgebiet, das durch vier Zellen Z1, Z2, Z3, Z4 gebildet ist. Die Zellen stellen hierbei die empfangbaren elektromagnetischen Felder von Sendevorrichtungen TX1, TX2, TX3, TX4 mit Antennen dar, die örtlich getrennt an vier Stellen der Decke im Ein- und Ausgangsbereich des Gebäudes angebracht und mit einer gemeinsamen Basisstation 10 verbunden sind. Zusätzlich sind mehrere Empfangsvorrichtungen RX1, RX2, RX3, RX4 für den HF-Bereich mit Empfangsantennen und weiterhin Empfangsvorrichtungen RX5, RX6 für den NF-Bereich vorhanden, die ebenfalls mit der Basisstation 10 verbunden sind.

Die Sendevorrichtungen TX1, TX2, TX3, TX4 sind über einen Datenbus 12 mit der Basisstation 10 synchronisiert und strahlen im NF-Bereich bei ca. 8 kHz elektromagnetische Felder aus, die sich in den vier Zellen Z1, Z2, Z3, Z4 voneinander unterscheiden. Im einfachsten Fall besteht der Unterschied darin, dass die elektromagnetischen Felder benachbarter Zellen zeitweise in der Phase gegenüber der Phase der anderen Felder verschoben werden können. Es ist jedoch auch möglich, die Felder mit einer individuellen Kennung zu markieren, welche durch Amplituden, Frequenz, Phasenparameter oder durch den Inhalt einer Modulation charakterisiert wird.

Die Empfangsvorrichtungen RX1, RX2, RX3, RX4 für den HF-Bereich, die mehrere Empfangskanäle abscannen und der Basisstation 10 übermitteln, sind zweckmäßig an denselben Antennenstandorten angebracht. Dagegen befinden sich die Empfangsvorrichtungen RX5, RX6 für einen zweiten Rückkanal im NF-Bereich im Abstand zu den Sendevorrichtungen TX1, TX2, TX3, TX4, um eine möglichst große Entkopplung und damit geringe Direkteinstreuung zu erzielen.

Begibt sich nun ein Mitarbeiter mit einem Gerät, das mit einem derartigen Transponder T1 ... T5 gekoppelt ist, in das Detektionsgebiet des Eingangs- und Ausgangsbereichs des Gebäudes, so gerät der Transponder T in das Feld einer der Zellen Z1, Z2, Z3, Z4 des Detektionsgebietes und aktiviert über die Empfangsvorrichtung des Transponders die Auswerte- und Steuervorrichtung. Die Steuervorrichtung veranlasst darauf im HF-Bereich eine Rückantwort mit der vollständigen Kennung des Transponders T. Wenn diese von der Basisstation 10 empfangen und ausgewertet ist, wird dem Transponder T einer von mehreren Rückkanälen, d.h. Zeitschlitzen und/oder Frequenzen, für Antworten zugewiesen und außerdem wird er in einen Zustand geschaltet, in dem er nur in den von der Basisstation 10 zugewiesenen Kanälen antwortet und in der Regel dies auch nur auf Anforderung der Basisstation 10 bzw. nach Synchronisation durch die Basisstation 10 tut.

Die Feldstärke der Sender der zugehörigen Zellen Z1, Z2, Z3, Z4 der Basisstation 10 ist so justiert, z.B. durch Auslöschen phasenentgegengesetzter Felder, dass zwischen zwei Paaren von Zellen Z1, Z2; Z3, Z4 eine Demarkationslinie 14 gebildet ist. Diese Demarkationslinie 14 stellt die Trennung zwischen einem inneren, zulässigen Aufenthaltsbereich und einem äußeren, für nicht legitimierte Transponder unzulässigen Aufenthaltsbereich dar. Wenn ein Transponder T die Demarkationslinie vom inneren Aufenthaltsbereich zum äußeren Aufenthaltsbereich überquert, wird dies zur Basisstation 10 gemeldet. Ist der Transponder T hierzu nicht berechtigt, wird Alarm ausgelöst.

Notebook-Computer, die beispielsweise von einem Büro zum anderen transportiert werden sollen, gelangen mit ihrem Transponder T nur in den inneren Bereich und werden dort zwar von der Basisstation 10 registriert, lösen aber keinen Alarm aus.

Die zur Bestimmung des Aufenthaltsbereich nötige Auswertung der elektromagnetischen Felder der Zellen Z1, Z2, Z3, Z4 ermittelt jeder Transponder T1, T2, T3, T4, T5 unabhängig und selbständig. Dadurch ist es auch möglich, dass mehrere Transponder T1, T2, T3, T4, T5 gleichzeitig feststellen können, wenn sie über die Demarkationslinie 14 verbracht werden. Es ist dann nur noch erforderlich die alarmauslösenden Rückmeldungen zu selektieren. Hierfür reicht aber eine einfache Zustandsmeldung, so dass keine hohe Datenrate benötigt wird. Die Rückmeldung kann im HF-Bereich über eine der Empfangsvorrichtungen RX1, RX2, RX3, RX4 oder über eine der Empfangsvorrichtungen RX5, RX6 erfolgen.

Eine Sabotageüberwachung ist möglich, wenn beispielsweise die Betriebsfrequenz für die Zellen, der Rückkanal oder der HF-Bereich in regelmäßigen Abständen auf Störsender überwacht werden.

Statt einer Alarmabgabe wäre es auch möglich, dass die Transponder T ohne Rückkanal arbeiten und über einen Eingriff in eine elektronische Schaltung des zu überwachenden Gerätes diese deaktivieren. Eine Reaktivierung wäre dann nur über einen Aktivierungscode möglich, der nur Berechtigten zugänglich ist.

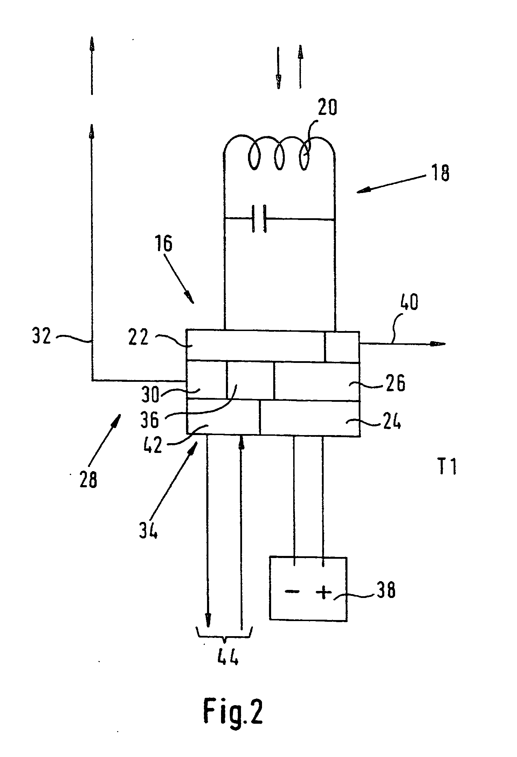

Fig. 2 zeigt ein Blockschaltbild eines für das beschriebene System geeigneten Transponders T1. Dieser umfasst eine Empfangsvorrichtung 16 für die Betriebsfrequenz von 8 kHz, bestehend aus einem Parallelresonanzkreis 18 mit einer gleichzeitig als Antenne dienenden Spule 20 und einem Empfänger 22, eine Auswerte- und Steuerschaltung 24 mit einem Speicher 26, eine erste Sendevorrichtung 28, bestehend aus einem HF-Sender 30 für 433 MHz und einer Antenne 32, eine zweite Sendevorrichtung 34, bestehend aus einem NF-Sender 36 für 14 kHz und der Spule 20 des vorhandenen Parallelresonanzkreises 18 als Antenne ergänzt durch Umschaltmittel für die andere Frequenz und eine Energiequelle 38. Die Auswerte- und Steuerschaltung 24 besitzt einen Ausgang 40 zur Ansteuerung eines optischen oder akustischen Signalgebers oder einer Vorrichtung zu Markieren, Entwerten oder Blockieren von Wertgegenständen und ergänzend kann noch ein Interface 42 mit einem Ein- und Ausgabeport 44 für ein elektronische Gerät vorgesehen sein, das über ein Software/Hardware-Protokoll mit dem Transponder kommunizieren kann.

Es ist möglich, im Anwendungsfall eines Notebook-Computers den Transponder in den Computer selbst zu integrieren und beispielsweise das BIOS zu aktivieren oder zu deaktivieren. In diesem Fall wäre es sinnvoll, die standardmäßig eingebaute Batterie des Computers zu verwenden, z.B. die Batterie für die Uhr. Außerdem können alle Bauteile des Transponders auf der gemeinsamen CPU-Platine im Computer angeordnet werden.

In dieser Ausgestaltung würde der Transponder sowohl über ein Drahtinterface zur CPU-Platine kommunizieren sowie über die bereits beschriebenen kontaktlosen Mittel zur Basisstation oder sonstigen Schreib- und/oder Lesevorrichtungen. Es können dann auch andere Geräteeigenschaften wie Serien-Nummer oder Ausstattung übertragen werden.

## Patentansprüche

1. Verfahren zur räumlichen Zuordnung wenigstens eines Transponders (T1, T2, T3, T4, T5) zu Zellen (Z1, Z2, Z3, Z4) eines Detektionsgebietes, dessen Zellen sich durch veränderbar oder permanent unterschiedliche Eigenschaften eines elektromagnetischen Feldes unterscheiden, wobei von dem Transponder (T1, T2, T3, T4, T5) die Eigenschaften der an seiner Position einzeln, selektiv oder resultierend empfangbaren elektromagnetischen Felder der Zellen (Z1, Z2, Z3, Z4) ausgewertet und selbständig die Zuordnung zu den Zellen (Z1, Z2, Z3, Z4) nach den Eigenschaften der einzeln empfangenen elektromagnetischen Felder oder nach dem Verhältnis der Anteile der Feldstärke der selektiv oder resultierend empfangenen elektromagnetischen Felder oder nach dem in der Feldstärke dominierenden Anteil der selektiv oder resultierend empfangenen elektromagnetischen Felder vorgenommen werden, **dadurch gekennzeichnet, dass** die Frequenz der zur räumlichen Zuordnung der Transponder (T1, T2, T3, T4, T5) dienenden elektromagnetischen Felder im NF-Bereich bis 150 kHz liegt, vorzugsweise zwischen 8 kHz bis 125 kHz beträgt, dass bei Zuordnung zu ausgewählten Zellen (Z1, Z2, Z3, Z4) und/oder zwischen aneinander grenzenden Zellen (Z1, Z2, Z3, Z4) unmittelbar, verzögert oder nach statistischer Auswertung der Häufigkeit ein Schaltvorgang durch den Transponder (T1) ausgelöst wird, durch den eine ferngesteuerte Aktion durch Aussenden eines Funksignals an wenigstens einen Funkempfänger vorgenommen wird, wobei eine Position oder eine Zustandsmeldung von einem Transponder (T1) zu einer Basisstation (10) über eine Rückmeldefrequenz, oder eine zusätzliche Rückmeldefrequenz, im NF-Bereich bis 150 kHz vorzugsweise zwischen 14 kHz und 125 kHz, zurückgemeldet wird.

2. Verfahren nach Anspruch 1, **dadurch gekennzeichnet, dass** bei gleichen Anteilen der Feldstärke der selektiv oder resultierend empfangenen elektromagnetischen Felder dieses Ergebnis als Grenze (14) zwischen zwei einander überlappenden benachbarten Zellen (Z1, Z2, Z3, Z4) gewertet wird.

3. Verfahren nach Anspruch 1, **dadurch gekennzeichnet, dass** bei einer indifferenten, das heißt, nicht eindeutigen Auswertung der Eigenschaft der resultierend empfangenen elektromagnetischen Felder aufgrund einer Auslöschung, die nach einer ersten gültigen Position und vor einer zweiten anderen gültigen Position ermittelt wurde, die indifferente, das heißt, nicht eindeutige Auswertung als Grenze (14) zwischen zwei einander überlappenden benachbarten Zellen (Z1, Z2, Z3, Z4) gewertet wird.

4. Verfahren nach Anspruch 2 oder 3, **dadurch gekennzeichnet, dass** die Ergebnisse der Zuordnung zur Grenze (14) zwischen zwei einander überlappenden benachbarten Zellen (Z1, Z2, Z3, Z4) im Transponder (T1) gespeichert werden.

5. Verfahren nach Anspruch 4 **dadurch gekennzeichnet, dass** eine statistische Auswertung der Häufigkeit der Zuordnung zur Grenze (14) zwischen zwei benachbarten Zellen (Z1, Z2, Z3, Z4) im Transponder (T1) vorgenommen wird.

6. Verfahren nach Anspruch 4 oder 5, **dadurch gekennzeichnet, dass** eine Auswertung der Reihenfolge der Zuordnung zu einer der Zellen (Z1, Z2, Z3, Z4) und/oder zur Grenze (14) zwischen zwei benachbarten Zellen (Z1, Z2, Z3, Z4) im Transponder (T1) vorgenommen wird.

7. Verfahren nach Anspruch 6, **dadurch gekennzeichnet, dass** bei Wechsel der Zuordnung zu ausgewählten Zellen (Z1, Z2, Z3, Z4) und/oder zwischen aneinander grenzenden Zellen (Z1, Z2, Z3, Z4) in einer vorgegebenen Reihenfolge unmittelbar, verzögert oder nach statistischer Auswertung der Häufigkeit ein Schaltvorgang durch den Transponder (T1) ausgelöst wird.

8. Verfahren nach Anspruch 1 oder 7, **dadurch gekennzeichnet, dass** durch den Schaltvorgang eine lokale Aktion, wie ein optischer oder akustischer Alarm, eine Deaktivierung einer elektronischen Schaltung oder eine Entwertung oder Markierung von Wertgegenständen vorgenommen wird.

9. Verfahren nach Anspruch 8, **dadurch gekennzeichnet, dass** durch den Schaltvorgang eine ferngesteuerte Aktion über eine Signalleitung vorgenommen wird.

10. Verfahren nach einem der Ansprüche 1 sowie 7 bis 9, **dadurch gekennzeichnet, dass** eine Aktivierung für Schaltvorgänge im Transponder (T1) und/oder die Art der ausgelösten Aktionen und/oder das Schreiben oder Ändern von Daten im Speicher des Transponders (T1) durch die Basisstation (10) oder durch eine Schreib- und/oder Lesestation durchgeführt wird.

11. Verfahren nach einem der Ansprüche 1 bis 10, **dadurch gekennzeichnet, dass** die veränderbar oder permanent unterschiedlichen Eigenschaften der elektromagnetischen Felder durch einen der Parameter oder eine Kombination der Parameter Feldstärke, Phase zwischen den Feldern, Frequenz sowie Modulationsinhalt gebildet sind.

12. Verfahren nach Anspruch 11, **dadurch gekennzeichnet, dass** die veränderbar unterschiedlichen Eigenschaften der elektromagnetischen Felder bedarfsweise so bemessen werden, dass eine feste oder eine verschiebbare Demarkationslinie (14) zwischen unterschiedlichen Zellen (Z1, Z2, Z3, Z4) erzeugt wird.

13. Verfahren nach Anspruch 10, **dadurch gekennzeichnet, dass** Rückmeldungen vom Transponder (T1, T2, T3, T4, T5) zu einer Basisstation (10) auf einer Frequenz vorgenommen werden, die im HF-Bereich, vorzugsweise oberhalb von 10 MHz liegt.

14. Verfahren nach einem der Ansprüche 10 bis 13, **dadurch gekennzeichnet, dass** jedem Transponder (T1, T2, T3, T4, T5) nach einem ersten oder erneuten Eintritt in eines der elektromagnetischen Felder des Detektionsgebietes durch einen im elektromagnetischen Feld der Basisstation (10) enthaltenen Kode ein allgemeiner Antwortkanal in Form eines Zeitschlitzes und/oder einer Frequenz für eine erste oder erneute Identifikation zugewiesen wird.

15. Verfahren nach einem der Ansprüche 10 bis 14, **dadurch gekennzeichnet, dass** jeder Transponder (T1, T2, T3, T4, T5) nach einem ersten oder erneuten Eintritt in eines der elektromagnetischen Felder des Detektionsgebietes eine individuelle Kennung zur Basisstation (10) sendet und dem Transponder (T1, T2, T3, T4, T5) durch die Basisstation (10) darauf ein eindeutiger Kanal für Rückmeldungen zugewiesen wird.

16. Verfahren nach Anspruch 15, **dadurch gekennzeichnet, dass** der Kanal für Rückmeldungen durch ein Zeitfenster und/oder einen Frequenzkanal innerhalb des für Rückmeldungen reservierten Frequenzbereichs gebildet wird.

17. Verfahren nach einem der Ansprüche 8 bis 16, **dadurch gekennzeichnet, dass** von jedem Transponder (T1, T2, T3, T4, T5) nach Zuweisung seines Rückkanals regelmäßig oder auf Anforderung der Basisstation (10) Daten über seine räumliche Zuordnung zu einer der Zellen (Z1, Z2, Z3, Z4) zur Basisstation (10) übermittelt werden.

18. Verfahren nach Anspruch 17, **dadurch gekennzeichnet, dass** von jedem Transponder (T1, T2, T3, T4, T5) auf Anforderung der Basisstation (10) oder einer Schreib- und/oder Lesestation zusätzlich Identifizierungsdaten und/oder Zustandsdaten und/oder Daten seines Speicherinhalts zur Basisstation (10) oder Schreib- und/oder Lesestation übermittelt werden.

19. Verfahren nach einem der Ansprüche 13 bis 18, **dadurch gekennzeichnet, dass** der Übertragungsweg im HF-Bereich zwischen dem Transponder (T1, T2, T3, T4, T5) und der Basisstation (10) von wenigstens einem HF-Empfänger (RX1, RX2, RX3, RX4) überwacht wird und dass bei Unterbrechung des Übertragungsweges im HF-Bereich vom Transponder (T1, T2, T3, T4, T5) zur Basisstation (10) eine Rückmeldung im NF-Bereich übermittelt wird.

20. Verfahren nach einem der Ansprüche 1 bis 19, **dadurch gekennzeichnet, dass** durch einen Transponder (T1), der im Gehäuse eines zu überwachenden elektronischen Gerätes eingebaut ist und mit der elektronischen Schaltung gekoppelt ist, Zustände und/oder in der elektronischen Schaltung gespeicherte Daten ausgelesen und zur Basisstation (10) übertragen werden und/oder durch die Basisstation (10) über den Transponder (T1) Zustände der elektronischen Schaltung gesetzt und/oder Daten eingeschrieben und gespeichert werden.

## Claims

1. Method for the spatial allocation of at least one transponder (T1, T2, T3, T4, T5) to cells (Z1, Z2, Z3, Z4) of a detection area, the cells of which differ from one another by variably or permanently different properties of an electromagnetic field, wherein the properties of the electromagnetic fields of the cells (Z1, Z2, Z3, Z4), which can be received individually, selectively or as resultants at the position of the transponder (T1, T2, T3, T4, T5), are evaluated by said transponder and allocation to the cells (Z1, Z2, Z3, Z4) is carried out automatically in accordance with the properties of the individually received electromagnetic fields or in accordance with the ratio of the proportions of the field strength of the electromagnetic fields received selectively or as resultants or in accordance with the proportion predominant in the field strength of the electromagnetic fields received selectively or as resultants, **characterised in that** the frequency of the electromagnetic fields used for spatial allocation of the transponders (T1, T2, T3, T4, T5) lies in the low-frequency range up to 150 kHz and is preferably between 8 kHz and 125 kHz, **in that**, in the case of allocation to selected cells (Z1, Z2, Z3, Z4) and/or between adjoining cells (Z1, Z2, Z3, Z4), a switching process is triggered by the transponder (T1) immediately, after a delay or after statistical evaluation of the frequency, by means of which switching process a remote-controlled action is carried out by transmitting a radio signal to at least one radio receiver, wherein a position or a status report is returned from a transponder (T1) to a base station (10) over a return message frequency, or an additional return message frequency in the low-frequency range up to 150 kHz, preferably between 14 kHz and 125 kHz.

2. Method according to claim 1, **characterised in that**, in the event of equal proportions of the field strength of the electromagnetic fields received selectively or as resultants, this result is evaluated as a boundary (14) between two overlapping adjacent cells (z1, Z2, Z3, Z4).

3. Method according to claim 1, **characterised in that**, in the event of an indifferent, i.e. unclear evaluation of the property of the electromagnetic fields received as resultants on account of a deletion determined after a first valid position and before a second, other valid position, the indifferent, i.e. unclear evaluation is evaluated as a boundary (14) between two overlapping adjacent cells (Z1 Z2, Z3, Z4).

4. Method according to claim 2 or 3, **characterised in that** the results of the allocation to the boundary (14) between two overlapping adjacent cells (Z1, Z2, Z3, Z4) are stored in the transponder (T1).

5. Method according to claim 4, **characterised in that** a statistical evaluation of the frequency of allocation to the boundary (14) between two adjacent cells (Z1, Z2, Z3, Z4) is carried out in the transponder (T1).

6. Method according to claim 4 or 5, **characterised in that** an evaluation of the order of allocation to one of the cells (Z1 Z2, Z3, Z4) and/or to the boundary (14) between two adjacent cells (Z1, Z2, Z3, Z4) is carried out in the transponder (T1).

7. Method according to claim 6, **characterised in that**, in the event of a change in the allocation to selected cells (Z1, Z2, Z3, Z4) and/or between adjoining cells (Z1, Z2, Z3, Z4) in a predefined order, a switching process is triggered by the transponder (T1) immediately, after a delay or after statistical evaluation of the frequency.

8. Method according to claim 1 or 7, **characterised in that**, as a result of the switching process, a local action is carried out, such as an optical or acoustic alarm, a deactivation of an electronic circuit or a voiding or marking of objects of value.

9. Method according to claim 8, **characterised in that**, as a result of the switching process, a remote-controlled action is carried out via a signal line.

10. Method according to one of claims 1 and 7 to 9, **characterised in that** an activation in respect of switching processes in the transponder (T1) and/or the type of triggered actions and/or the writing or modifying of data in the memory of the transponder (T1) is carried out by the base station (10) or by a writing and/or reading station.

11. Method according to one of claims 1 to 10, **characterised in that** the variably or permanently different properties of the electromagnetic fields are formed by one of the following parameters or a combination of the following parameters: field strength, phase between the fields, frequency and modulation content.

12. Method according to claim 11, **characterised in that** the variably different properties of the electromagnetic fields are adjusted when necessary such that a fixed or displaceable demarcation line (14) is generated between different cells (Z1, Z2, Z3, Z4).

13. Method according to claim 10, **characterised in that** return messages from the transponder (T1, T2, T3, T4, T5) to a base station (10) are sent on a frequency which lies in the high-frequency range, preferably above 10 MHz.

14. Method according to one of claims 10 to 13, **characterised in that** a general response channel in the form of a time slot and/or a frequency for first or renewed identification is allocated to each transponder (T1, T2, T3, T4, T5) after a first or renewed entry into one of the electromagnetic fields of the detection area by means of a code contained in the electromagnetic field of the base station (10).

15. Method according to one of claims 10 to 14, **characterised in that** each transponder (T1, T2, T3, T4, T5), after a first or renewed entry into one of the electromagnetic fields of the detection area, sends an individual identifier to the base station (10) and then a unique channel for return messages is allocated to the transponder (T1, T2, T3, T4, T5) by the base station (10).

16. Method according to claim 15, **characterised in that** the channel for return messages is formed by a time slot and/or a frequency channel within the frequency range reserved for return messages.

17. Method according to one of claims 8 to 16, **characterised in that** each transponder (T1, T2, T3, T4, T5), after allocation of its return channel, regularly or at the request of the base station (10) transmits to the base station (10) data regarding its spatial allocation to one of the cells (Z1, Z2, Z3, Z4).

18. Method according to claim 17, **characterised in that** each transponder (T1, T2, T3, T4, T5), at the request of the base station (10) or of a writing and/or reading station, additionally transmits to the base station (10) or to the writing and/or reading station identification data and/or status data and/or data regarding its memory content.

19. Method according to one of claims 13 to 18, **characterised in that** the transmission path in the high-frequency range between the transponder (T1, T2, T3, T4, T5) and the base station (10) is monitored by at least one high-frequency receiver (RX1, RX2, RX3, RX4), and **in that**, in the event of a break in the transmission path in the high-frequency range from the transponder (T1, T2, T3, T4, T5) to the base station (10), a return message is transmitted in the low-frequency range.

20. Method according to one of claims 1 to 19, **characterised in that** a transponder (T1), which is installed in the housing of an electronic device to be monitored and which is coupled to the electronic circuit, reads states and/or data stored in the electronic circuit and transmits these to the base station (10), and/or states of the electronic circuit are set and/or data are written and stored by the base station (10) via the transponder (T1).

## Revendications

1. Procédé d'affectation dans l'espace d'au moins un transpondeur (T1, T2, T3, T4, T5) aux cellules (Z1, Z2, Z3, Z4) d'une zone de détection dont les cellules se différencient par des propriétés d'un champ électromagnétique différentes permanentes ou modifiables, le transpondeur (T1, T2, T3, T4, T5) interprétant les propriétés des champs électromagnétiques des cellules (Z1, Z2, Z3, Z4) dont la réception s'effectue de manière individuelle, sélective ou déductive et effectuant de manière autonome la répartition vers les cellules (Z1, Z2, Z3, Z4) en fonction des propriétés des champs électromagnétiques reçus séparément ou proportionnellement à l'intensité des champs électromagnétiques reçus de manière sélective ou déductive ou en fonction de la part dominante de l'intensité des champs électromagnétiques reçus de manière sélective ou déductive, **caractérisé en ce que** la fréquence des champs électromagnétiques servant à la répartition dans l'espace des transpondeurs (T1, T2, T3, T4, T5) se situe dans la zone BF jusqu'à 150 kHz, soit de préférence entre 8 kHz et 125 kHz, **en ce que**, en cas de répartition vers des cellules (Z1, Z2, Z3, Z4) sélectionnées et/ou entre des cellules (Z1, Z2, Z3, Z4) voisines, une opération de couplage est déclenchée par le transpondeur (T1) soit directement, soit de manière différée ou soit après interprétation statistique de la fréquence, entraînant une action commandée à distance par l'envoi d'un signal radio vers au minimum un récepteur radio, la position ou un message concernant l'état étant renvoyé par un transpondeur (T1) à une station de base (10) via une fréquence de rétrosignal, ou une fréquence de rétrosignal supplémentaire de la zone BF jusqu'à 150 kHz, de préférence entre 14 kHz et 125 kHz.

2. Procédé selon la revendication 1, **caractérisé en ce que,** pour les mêmes proportions d'intensité des champs électromagnétiques reçus de manière sélective ou déductive, ce résultat est considéré comme la limite (14) entre deux cellules (Z1, Z2, Z3, Z4) voisines imbriquées l'une dans l'autre.

3. Procédé selon la revendication 1, **caractérisé en ce que,** pour une interprétation indifférente, c'est-à-dire non univoque, de la propriété des champs électromagnétiques reçus de manière déductive en raison d'un effacement, établie après une première position valable et avant une seconde position également valable, l'interprétation indifférente, c'est-à-dire non univoque, est considérée comme la limite (14) entre deux cellules (Z1, Z2, Z3, Z4) voisines imbriquées l'une dans l'autre.

4. Procédé selon la revendication 2 ou 3, **caractérisé en ce que** les résultats de la répartition à la limite (14) entre deux cellules (Z1, Z2, Z3, Z4) voisines imbriquées l'une dans l'autre sont enregistrés dans le transpondeur (T1).

5. Procédé selon la revendication 4, **caractérisé en ce qu'**une interprétation statistique de la fréquence de répartition à la limite (14) entre deux cellules (Z1, Z2, Z3, Z4) voisines est effectuée dans le transpondeur (T1).

6. Procédé selon la revendication 4 ou 5, **caractérisé en ce qu'**une interprétation de l'ordre de répartition sur l'une des cellules (Z1, Z2, Z3, Z4) et/ou à la limite (14) entre deux cellules (Z1, Z2, Z3, Z4) voisines est effectuée dans le transpondeur (T1).

7. Procédé selon la revendication 6, **caractérisé en ce qu'**en cas de changement de la répartition vers des cellules (Z1, Z2, Z3, Z4) sélectionnées et/ou entre des cellules (Z1, Z2, Z3, Z4) limitrophes dans un ordre prédéfini, une opération de couplage est déclenchée par le transpondeur (T1) soit directement, soit de manière différée ou soit après interprétation statistique de la fréquence.

8. Procédé selon la revendication 1 ou 7, **caractérisé en ce que** l'opération de couplage provoque une action locale telle qu'une alarme visuelle ou sonore, une désactivation d'une connexion électronique ou encore une dévalorisation ou un marquage d'objets de valeur.

9. Procédé selon la revendication 8, **caractérisé en ce que** l'opération de couplage provoque une action commandée à distance par l'intermédiaire d'un circuit d'acheminement du signal.

10. Procédé selon l'une des revendications 1 ou 7 à 9, **caractérisé en ce qu'**une activation des opérations de couplage dans le transpondeur (T1) et/ou de la nature des actions déclenchées et/ou de l'inscription ou de la modification de données dans la mémoire du transpondeur (T1) est effectuée par la station de base (10) ou par une station d'écriture et/ou de lecture.

11. Procédé selon l'une des revendications 1 à 10, **caractérisé en ce que** les propriétés des champs électromagnétiques différentes permanentes ou modifiables sont constituées d'un des paramètres ou d'une combinaison des paramètres : intensité du champ, phase entre les champs, fréquence ainsi que contenu de la modulation.

12. Procédé selon la revendication 11, **caractérisé en ce que** les propriétés des champs électromagnétiques différentes modifiables sont, en cas de besoin, mesurables de manière à établir une ligne de démarcation (14) fixe ou déplaçable entre les différentes cellules (Z1, Z2, Z3, Z4).

13. Procédé selon la revendication 10, **caractérisé en ce que** les rétrosignaux du transpondeur (T1, T2, T3, T4, T5) vers une station de base (10) sont émis à une fréquence de la zone HF, de préférence supérieure à 10 MHz.

14. Procédé selon l'une des revendications 10 à 13, **caractérisé en ce qu'**un canal de réponse général est affecté à chaque transpondeur (T1, T2, T3, T4, T5) après une entrée initiale ou renouvelée dans l'un des champs électromagnétiques de la zone de détection par un code contenu dans le champ électromagnétique de la station de base (10) sous la forme d'un intervalle temporel et/ou d'une fréquence pour une identification initiale ou renouvelée.

15. Procédé selon l'une des revendications 10 à 14, **caractérisé en ce que** chaque transpondeur (T1, T2, T3, T4, T5) envoie, après une entrée initiale ou renouvelée dans l'un des champs électromagnétiques de la zone de détection, un code individuel à la station de base (10) et **en ce que** chaque transpondeur (T1, T2, T3, T4, T5) se voit affecter ensuite un canal univoque pour les rétrosignaux par la station de base (10).

16. Procédé selon la revendication 15, **caractérisé en ce que** le canal pour les rétrosignaux est constitué par un intervalle de temps et/ou un canal de fréquence à l'intérieur de la plage de fréquence réservée aux rétrosignaux.

17. Procédé selon l'une des revendications 8 à 16, **caractérisé en ce que** chaque transpondeur (T1, T2, T3, T4, T5) transmet, après affectation de son canal de retour, à la station de base (10) à intervalles réguliers ou sur demande de la station de base (10) des données concernant son affectation à l'une des cellules (Z1, Z2, Z3, Z4).

18. Procédé selon la revendication 17, **caractérisé en ce que** chaque transpondeur (T1, T2, T3, T4, T5) transmet à la station de base (10) ou à une station d'écriture et/ou de lecture de plus des données d'identification et/ou des données d'état et/ou des données concernant le contenu de sa mémoire sur demande de la station de base (10) ou d'une station d'écriture et/ou de lecture.

19. Procédé selon l'une des revendications 13 à 18, **caractérisé en ce que** la voie de transmission de la zone HF entre le transpondeur (T1, T2, T3, T4, T5) et la station de base (10) est surveillée par au minimum un récepteur HF (RX1, RX2, RX3, RX4) et **en ce que**, en cas d'interruption de la voie de transmission de la zone HF entre le transpondeur (T1, T2, T3, T4, T5) et la station de base (10), un rétrosignal est transmis dans la zone HF.

20. Procédé selon l'une des revendications 1 à 19, **caractérisé en ce que,** par l'intermédiaire d'un transpondeur (T1), installé dans le boîtier d'un appareil électronique à surveiller et couplé à la connexion électronique, sont lus des états et/ou des données stockées dans la connexion électronique transmis ensuite à la station de base (10) et/ou sont établis des états de la connexion électronique et/ou inscrites et stockées des données par la station de base (10) via le transpondeur (T1).
